# FASCICULE DE BREVET EUROPEEN

(11) **EP 2 567 540 B1**
(45) Date de publication et mention de la délivrance du brevet: **31.10.2018**
(21) Numéro de dépôt: 11718061.2
(22) Date de dépôt: 03.05.2011
(51) Int. Cl.: H04N 5/372

(54) **CAPTEUR D'IMAGE LINEAIRE A DEFILEMENT ET SOMMATION ANALOGIQUE ET NUMERIQUE ET PROCEDE CORRESPONDANT**
LINEARER STREIFENBILDSENSOR MIT ANALOGER UND DIGITALER SUMMIERUNG UND ENTSPRECHENDES VERFAHREN
SWIPE LINEAR IMAGE SENSOR WITH ANALOG AND DIGITAL SUMMATION AND CORRESPONDING METHOD

(30) Priorité: 04.05.2010 FR 1001912
(43) Date de publication de la demande: 13.03.2013
(73) Titulaire: Teledyne e2v Semiconductors SAS, 38120 Saint-Egrève (FR)
(72) Inventeur: MAYER, Frédéric, 38500 Voiron (FR); HIBON, Vincent, F-38100 Grenoble (FR); BUGNET, Henri, F-38430 Moirans (FR); VAILLANT, Joël, F-38500 Voiron (FR)
(74) Mandataire: Desvignes, Agnès
(86) Numéro de dépôt international: PCT/EP2011/057055
(87) Numéro de publication internationale: WO 2011/138326

(56) Documents cités:
- US-A1- 2010 046 853

## Description

L'invention concerne les capteurs d'image linéaire à défilement et intégration de signal (ou capteurs TDI, de l'anglais : "Time Delay Integration Linear Sensors), dans lesquels une image d'une ligne de points d'une scène observée est reconstituée par addition d'images successives prises par plusieurs lignes photosensibles observant successivement une même ligne de la scène au fur et à mesure que la scène défile devant le capteur perpendiculairement aux lignes.

Ces capteurs sont utilisés par exemple dans des systèmes d'observation de la terre par satellite. Ils comprennent plusieurs lignes parallèles de pixels photosensibles ; le séquencement des circuits de commande des différentes lignes (contrôle de temps d'exposition puis de lecture des charges photogénérées) est synchronisé par rapport au défilement relatif de la scène et du capteur, de manière que toutes les lignes du capteur voient une seule ligne de la scène observée. Les signaux générés sont ensuite additionnés point à point pour chaque point de la ligne observée.

Le rapport signal/bruit théorique est amélioré dans le rapport de la racine carrée du nombre N de lignes du capteur. Ce nombre peut aller de quelques lignes à une centaine selon les applications (contrôle industriel, observation terrestre, radiographie panoramique dentaire ou mammographie).

Dans les capteurs à transfert de charges (capteurs CCD), l'addition des signaux point par point se faisait naturellement et sans bruit de lecture en vidant dans une ligne de pixels les charges générées et accumulées dans la ligne de pixels précédente, en synchronisme avec le déplacement relatif de la scène et du capteur. La dernière ligne de pixels, ayant accumulé N fois les charges engendrées par la ligne de scène observée, pouvait ensuite être transférée vers un registre de sortie et convertie lors d'une phase de lecture, en tension ou courant électrique.

De tels capteurs à transfert de charges existent, soit dans des technologies traditionnelles avec grilles de transfert adjacentes réalisées à partir d'au moins deux niveaux de silicium polycristallin, le deuxième niveau recouvrant en partie le premier, soit dans des technologies à un seul niveau de grille de silicium polycristallin, plus compatibles avec les technologies actuelles de fabrication de circuits intégrés logiques CMOS.

On comprend que si chaque pixel doit être capable de stocker les charges résultant de l'addition de charges en provenance de N pixels, alors il doit avoir une capacité de stockage beaucoup plus élevée que s'il ne devait stocker que ses propres charges. Sinon, on risque d'avoir une saturation du pixel. Pour l'éviter il faudrait augmenter l'encombrement du pixel, ce qui nuit à la résolution du capteur.

Pour effectuer une intégration de charges qui ne soit pas trop bruitée et qui permette l'addition de charges sans trop de risque de saturation des pixels qui reçoivent l'addition des charges des autres pixels l'invention propose un procédé de fonctionnement d'un capteur d'image à défilement et sommation, permettant la lecture synchronisée d'une même ligne d'image successivement par plusieurs lignes de P pixels photosensibles et la sommation pixel à pixel des signaux lus par les différentes lignes et correspondant à un même ligne d'image. Dans ce procédé, on propose de décomposer les lignes de pixels en plusieurs groupes ; dans chaque groupe de lignes la sommation se fait de manière analogique par transfert de charges de pixel à pixel (en colonne) avec accumulation progressive de charges correspondant à un même point d'image ; les charges des pixels de la dernière ligne de chaque groupe sont lues par un circuit de lecture associé à cette dernière ligne ; le circuit de lecture effectue une conversion charge-tension pour chaque pixel ; le signal analogique qui résulte de cette conversion est envoyé par un conducteur de colonne (autant de conducteurs de colonne qu'il y a de pixels dans une ligne) vers un circuit de numérisation respectif qui établit pour chaque colonne une valeur numérique correspondant à chaque signal analogique, c'est-à-dire à chaque groupe de lignes, et on additionne dans chaque colonne plusieurs valeurs numériques correspondant à des groupes de lignes respectifs qui ont vu une même ligne d'image au cours du défilement.

On effectue donc une combinaison d'une sommation analogique peu bruitée, par transfert et accumulation de charges dans un groupe de pixels, et d'une sommation numérique des résultats des sommations analogiques, toutes ces sommations se référant à une même ligne d'image observée au cours du défilement.

Plus précisément, l'invention propose un capteur d'image à défilement et sommation, permettant la lecture synchronisée d'une même ligne d'image successivement par plusieurs lignes de P pixels photosensibles et la sommation pixel à pixel des signaux lus par les différentes lignes, caractérisé en ce que le capteur comprend :
- une matrice de M groupes de N lignes de P pixels produisant des charges proportionnelles à l'éclairement, ces pixels étant agencés en P registres à transfert de charges en colonne de rang j, j variant de 1 à P, permettant l'accumulation progressive dans un pixel de rang j de la Nième ligne de pixels d'un groupe de rang m (m=1 à M) des charges recueillies dans les N pixels de rang j de ce groupe,
- à l'intérieur de la matrice de pixels, M lignes de P circuits de lecture adressables en ligne et effectuant une conversion charge-tension des charges recueillies dans les P pixels de la Nième ligne d'un groupe de pixels, les circuits de lecture d'une ligne de rang m étant disposés en ligne et chaque circuit de lecture de rang j (j=1 à P) de cette ligne étant relié à un conducteur de colonne respectif de rang j commun à tous les circuits de lecture de rang j des différentes lignes pour fournir sur ce conducteur un signal électrique analogique résultant des charges accumulées dans les pixels de rang j de la Nième ligne d'un groupe de lignes de pixels quelconque,
- en dehors de la matrice de pixels, M lignes de P circuits de numérisation adressables en ligne chacune en correspondance avec l'adressage d'une ligne respective de circuits de lecture, le circuit de numérisation de rang j de cette ligne comprenant un échantillonneur pour échantillonner un signal analogique présent sur le conducteur de colonne de rang j, et un convertisseur analogique-numérique pour fournir une valeur numérique du signal analogique,
- un moyen de sommation de valeurs numériques apte à additionner des valeurs numériques issues des convertisseurs et correspondant à l'échantillonnage de plusieurs signaux analogiques correspondant tous à l'observation d'un même point d'image de rang j dans une ligne d'image observée.

Cette structure combine une sommation de charges analogique, avec un faible bruit, sur N lignes successives, avec une sommation numérique des résultats des sommations analogiques, cette sommation numérique permettant une grande dynamique.

Les circuits de lecture qui sont placés après chaque groupe de N lignes de pixels sont des circuits de conversion charge-tension qui permettent de reporter sur un conducteur de colonne un potentiel représentant les charges accumulées par N pixels en colonne. Ces circuits de lecture comportent en principe un noeud de stockage de charges, un transistor de transfert pour déverser les charges d'un pixel d'une N^{ième} ligne vers le noeud de stockage, un transistor de réinitialisation du potentiel du noeud de stockage, un transistor suiveur pour engendrer un potentiel représentant la quantité de charges dans le noeud de stockage, et un transistor de sélection de ligne pour sélectionner une ligne de circuits de lecture parmi M et relier le transistor suiveur des circuits de lecture de cette ligne à un conducteur de colonne respectif au moment où on veut échantillonner les potentiels dans un circuit de numérisation.

L'échantillonneur faisant partie d'un circuit de numérisation élémentaire comprend de préférence des moyens pour stocker d'abord un niveau de référence de tension à la suite d'une impulsion de réinitialisation appliquée au transistor de réinitialisation d'un circuit de lecture, puis un niveau de signal à la suite d'une impulsion de transfert appliquée au transistor de transfert ; le convertisseur analogique-numérique convertit alors la différence entre ces deux niveaux. L'impulsion de réinitialisation et l'impulsion de transfert sont de préférence communes à tous les circuits de lecture des M lignes et la périodicité de ces impulsions correspond à la durée d'intégration de charges dans une ligne de pixels.

De préférence, le moyen de sommation est distribué dans les circuits de numérisation. Il y a donc un moyen de sommation élémentaire dans le circuit élémentaire de numérisation de rang j de la ligne de rang m ; il additionne une valeur numérique courante, issue de la conversion d'une sommation analogique de charges du groupe de lignes de rang m, à une valeur numérique précédemment obtenue dans le groupe de circuits de numérisation de rang m-1.

Le convertisseur analogique-numérique présent dans chaque circuit de numérisation est de préférence un convertisseur à rampe comprenant un comparateur et un compteur, le compteur comptant à une cadence fixe jusqu'au basculement du comparateur lors de l'application d'une rampe de tension à une entrée du comparateur. La sortie du compteur d'un circuit de numérisation de rang m en ligne et de rang j en colonne est de préférence reliée à une entrée du compteur d'un circuit de numérisation de même rang j en colonne et de rang m+1 en ligne afin que le contenu dudit compteur du circuit de rang m+1 à la fin de la rampe corresponde à l'addition de la quantité de lumière reçue par un groupe de N pixels et du contenu précédent du compteur de rang m (correspondant à un autre groupe de N pixels ayant vu le même point d'image).

On peut prévoir que la ligne de circuits de lecture est incorporée à une ligne de pixels photosensibles ou non photosensibles constituée de manière à autoriser de manière sélective soit un transfert de charges entre une dernière ligne de pixels d'un groupe de N lignes et une première ligne de pixels du groupe suivant soit un déversement de charges de la dernière ligne de pixels d'un groupe vers un noeud de stockage en vue de la lecture et la numérisation des charges déversées.

Dans une réalisation particulière, on prévoit un moyen de détection de la quantité de charges présentes dans le pixel de rang j de la N^{ième} ligne de pixels d'un groupe de pixels de rang m, et un moyen pour lire ces charges dans le circuit de lecture de rang m en ligne et de rang j en colonne si la quantité de charges dépasse un seuil ou de transférer ces charges, sans les lire, vers la première ligne de pixels du groupe de pixels de rang m+1 si la quantité de charges est inférieure à ce seuil.

La ligne de circuits de lecture peut être intégrée à la N^{ième} ligne de pixels photosensibles.

On notera qu'on a déjà proposé de sommer la valeur numérique correspondant au pixel de rang j de la ligne dans un registre accumulateur de rang j qui accumule les valeurs numériques correspondant aux pixels de même rang j de N lignes successives (brevet FR2906080). Dans cette technique, les pixels sont des pixels CMOS actifs (et non des pixels à transfert de charge) dans lesquels une conversion charge-tension est faite à l'intérieur du pixel. La tension analogique qui en résulte est convertie en numérique et les additions de signaux permettant l'intégration de signal synchronisée avec le défilement sont des additions numériques des signaux issus du pixel. Ces conversions et additions numériques engendrent un bruit très important que la présente invention réduit considérablement en réduisant le nombre des additions numériques tout en conservant un nombre total de sommations plus important.

US 2010/0046853 décrit une architecture TDI divisée en une multitude de groupes dont les signaux d'images subissent un traitement d'image avant d'être combinés. D'autres caractéristiques et avantages de l'invention apparaîtront à la lecture de la description détaillée qui suit et qui est faite en référence aux dessins annexés dans lesquels :
- la figure 1 représente l'architecture générale du capteur d'image selon l'invention ;
- la figure 2 représente une variante d'architecture ;
- la figure 3 représente un détail dans une variante où les circuits de lecture sont intégrés à une ligne de pixels photosensibles.

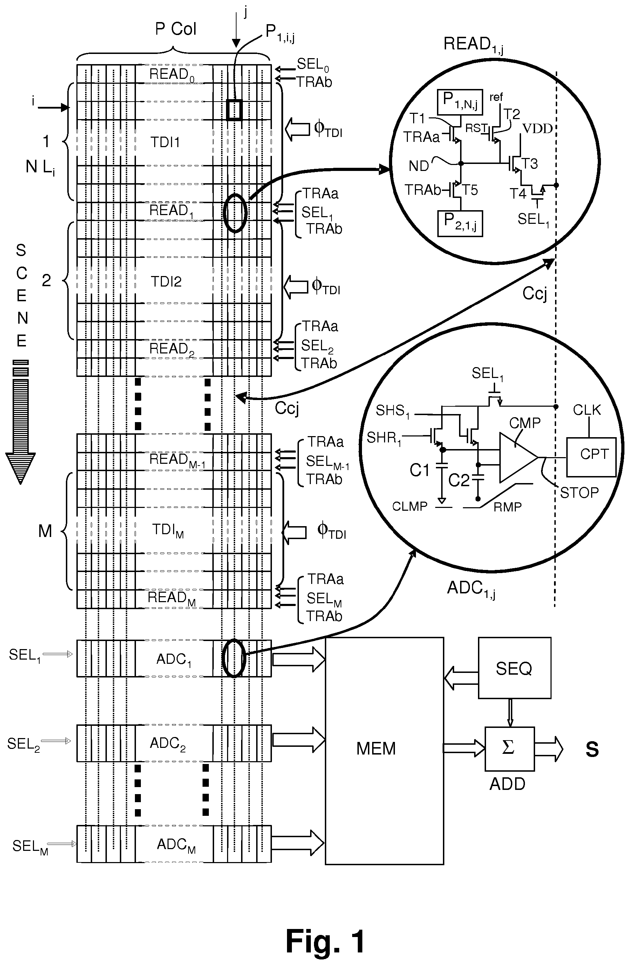

Sur la figure 1, on a représenté l'architecture générale du capteur. La partie supérieure du schéma est la partie photosensible. Elle comprend M groupes de N lignes de P pixels photosensibles. Les groupes sont références de 1 à M. Un groupe de lignes de pixels est désigné par TDI avec un indice de 1 à M : TDI₁ à TDI_{M}. Entre deux groupes consécutifs est disposé un circuit de lecture respectif : READ₁ associé au groupe TDI₁ et situé entre ce dernier et le groupe TDI₂ ; de même, READ₂ associé au groupe TDI₂, etc. jusqu'à READ_{M} après le groupe TDI_{M} et associé à ce dernier. Un circuit READ₀ peut être prévu facultativement avant le groupe TDI₁ dans le cas où on souhaite que le capteur puisse fonctionner indifféremment dans un sens de défilement ou dans le sens contraire.

Chaque groupe TDIₘ , m étant l'indice d'un groupe parmi M, est composé d'une matrice de N lignes et P colonnes ; par convention, le pixel P_{m,i,j} est situé dans le groupe de rang m (m variant de 1 à M) au croisement de la ligne de rang i, i variant de 1 à N, et de la colonne de rang j (j variant de 1 à P). Le réseau de pixels est un réseau fonctionnant en mode de transfert de charges en colonne, c'est-à-dire qu'après chaque période d'intégration unitaire de durée T, les charges présentes dans une ligne de pixels de rang i, incluant les charges générées par l'éclairement de cette ligne pendant la durée T, sont déversées dans la ligne de rang immédiatement supérieur i+1 ; ceci est fait simultanément pour toutes les lignes, de sorte que les charges de la ligne immédiatement précédente de rang i-1 sont déversées dans la ligne de rang i et viennent remplacer celles qui ont été déversées dans la ligne de rang i+1. Pour la première ligne, les charges vidées ne sont pas remplacées de sorte qu'à la fin d'une durée d'intégration il n'y a que les charges résultant de l'intégration de la lumière dans les pixels pendant la durée T ; pour une ligne de rang i, les charges présentes dans la ligne à la fin d'une période d'intégration de durée T sont la somme des charges intégrées dans les lignes de rang 1 à i pendant les i périodes d'intégration qui viennent de s'écouler. Le déplacement de l'image par rapport au capteur est fait en synchronisme avec la durée T de sorte que les i lignes de pixels ont vu la même ligne d'image pendant les i périodes T.

Les charges de la dernière ligne, correspondant à l'accumulation de N observations de la même ligne d'image, sont déversées après chaque durée d'intégration dans le circuit de lecture READ_{M} pour y être lues ; on verra que dans une réalisation préférentielle on peut choisir de lire les charges (puis les détruire) ou au contraire de les transférer vers le groupe de lignes de rang suivant m+1 pour continuer l'intégration, ce dernier transfert étant intéressant dans le cas où l'éclairement est faible.

Les organisations de pixels photosensibles permettant ainsi à transfert de charges sont bien connus ; ils utilisent plusieurs électrodes pour chaque ligne de pixels, ces électrodes s'étendant le long des lignes de pixels et étant alimentées par des potentiels qui alternent entre deux valeurs qui sont les mêmes pour chaque ligne de pixels de sorte que les déplacements de charges d'une ligne à l'autre sont simultanés pour toutes les lignes d'un groupe, et même pour toutes les lignes des différents groupes. Les électrodes contrôlent la formation de puits de potentiel et barrières de potentiel et le déplacement de charges d'un puits vers un autre. Ces électrodes ne sont pas représentées et on a seulement désigné par l'appellation Φ_{TDI} l'ensemble des signaux de commande ou "phases de commande" des électrodes qui assurent les transferts de charge synchronisés avec le défilement de l'image. Les phases Φ_{TDI} sont identiques pour toutes les lignes de pixels de tous les groupes de lignes.

Certaines technologies de pixels à transfert de charges traditionnelles utilisent deux niveaux de grille de silicium polycristallin avec un recouvrement partiel du premier niveau par le deuxième niveau (dans le but d'assurer un transfert plus efficace des charges). D'autre technologies plus récentes n'utilisent qu'un seul niveau de silicium polycristallin ; ces dernières ont l'avantage d'être plus compatibles avec les technologies de circuits intégrés à transistors MOS ou CMOS, et on préfèrera ces technologies car l'architecture du capteur selon l'invention prévoit l'utilisation de circuits de lecture à transistors MOS.

Le circuit de lecture READₘ associé au groupe TDIₘ comprend P circuits de lecture élémentaires READ_{m,j}, un pour chaque colonne de pixels de la matrice TDIₘ.

Chaque circuit de lecture élémentaire de rang j (j=1 à j=P) est un circuit à transistors effectuant une conversion charge-tension pour reporter sur un conducteur de colonne Ccj de rang j un potentiel représentant la quantité de charges présente dans le pixel de rang j de la dernière ligne du groupe TDIₘ. Contrairement à ce qui existe dans les matrices à transfert de charges classique, le circuit de lecture n'est donc pas un registre à décalage à transfert de charges "horizontal" recueillant les charges de la dernière ligne de la matrice et les envoyant vers un circuit de conversion unique.

Le détail d'un circuit de lecture élémentaire READ_{1,j} (associé au premier groupe TDI₁) de rang j en colonne est illustré sur la figure 1. Il comprend un noeud de stockage intermédiaire ND où seront déversées les charges du pixel P_{1,N,j} de rang N du groupe TDI₁, un transistor de transfert T1 pour assurer ce déversement, un transistor de réinitialisation T2 permettant de vider les charges du noeud de stockage après un déversement, un transistor suiveur T3 pour convertir les charges en tension, et un transistor de sélection de groupe T4 pour relier le transistor suiveur au conducteur de colonne Ccj lorsqu'on veut transférer sur ce conducteur un potentiel représentant les charges accumulées dans le noeud de stockage.

Un deuxième transistor de transfert T5 est prévu éventuellement pour transférer les charges du noeud de stockage dans le sens inverse (du groupe TDI₂ vers le circuit de lecture READ₁

Le transistor de transfert T1, commandé par un signal TRAa, relie une zone de stockage de charges du pixel de la dernière ligne et le noeud de stockage ND (une diffusion flottante). Le transistor de réinitialisation, commandé par un signal RST, relie le noeud de stockage à un drain d'évacuation à un potentiel de référence. Le transistor suiveur T3 a sa grille reliée au noeud de stockage, son drain relié à un potentiel d'alimentation, et sa source reliée au drain du transistor de sélection T4. Le transistor de sélection, commandé par un signal de sélection SEL₁ (pour le circuit de lecture READ_{1,j}), relie la source du transistor suiveur T3 au conducteur de colonne Ccj. Le signal de sélection SEL₁ est commun à toute la ligne de circuits de lecture READ_{1,j}.

Le deuxième transistor de transfert T5, s'il est présent, peut être rendu conducteur par un signal TRAb.

Le circuit de lecture READₘ occupe une hauteur, dans le sens des colonnes de pixels, égale à la hauteur d'une ligne de pixels ou un multiple de cette hauteur afin de permettre de conserver un synchronisme entre le défilement d'une ligne d'image et les périodes d'intégration T lorsqu'une ligne d'image passe successivement devant les différents groupes de lignes.

On a ainsi décrit la partie photosensible du capteur.

Le bas du schéma de la figure 1 représente la partie numérisation et sommation numérique du capteur. Cette partie comprend autant de lignes de circuits de numérisation qu'il y a de groupes de lignes de pixels, c'est-à-dire M. Les lignes de circuits de numérisation sont désignées par ADC₁ à ADC_{M}. Chaque ligne comprend P circuits élémentaires de numérisation ADC_{m,j}. Des circuits de sommation numérique sont en outre prévus pour faire des additions à partir des sorties des circuits de numérisation.

Les entrées des circuits de numérisation élémentaires de rang j=1 à j=P sont les conducteurs de colonne Ccj.

Les potentiels résultant de l'addition de N quantités de charges correspondant à un même point d'image sont appliqués à un conducteur de colonne de rang j grâce aux circuits de lecture élémentaires. L'application d'un potentiel sur le conducteur de colonne se fait successivement pour les différents groupes de lignes de pixels et il se fait à chaque fois pour toutes les colonnes de pixel à la fois puisqu'il y a P circuits de lecture élémentaires fonctionnant en parallèle, associées chacun à un conducteur de colonne respectif. La périodicité des transferts de potentiel sur le conducteur de colonne pour chaque groupe de N lignes est la durée d'intégration T et tous les groupes doivent être lus successivement pendant cette durée T.

Par conséquent, à chaque période T, la chronologie des lectures comprend un adressage successif des circuits de lecture READ₁ à READ_{M} pour reporter successivement sur le conducteur de colonne des données en provenance de la dernière ligne de rang N de chacun des M groupes de lignes de pixels.

Les signaux de sélection de circuits de lecture, SEL₁ à SEL_{M} se succèdent donc. Les signaux de réinitialisation RST peuvent être communs à tout le capteur ou au contraire être séparés. Les signaux de transfert TRAa ou TRAb sont communs à tout le capteur.

Chaque ligne de circuits de numérisation ADC₁ à ADC_{M} est associée à une ligne respective de circuits de lecture READ₁ à READ_{M}. La ligne de circuits de numérisation de rang m est mise en service en vue d'une numérisation au moment où le conducteur de colonne reçoit du circuit de lecture de rang m le potentiel qui sera à numériser. Pour cela, les circuits de numérisation ADCₘ sont commandés par le même signal de sélection SELₘ qui sert à sélectionner les circuits de lecture de rang m.

La figure 1 représente le détail d'un exemple possible de circuit de numérisation élémentaire ADC_{1,j} de rang j en colonne et de rang 1 en ligne, associé au circuit de lecture élémentaire READ_{1,j} de même rang. Il comprend un échantillonneur bloqueur destiné à effectuer un double échantillonnage, et un convertisseur analogique-numérique à rampe. L'échantillonneur comprend deux capacités C1 et C2 et des interrupteurs à transistors ; le convertisseur à rampe comprend un compteur CPT qui compte à une cadence constante donnée par une horloge CLK et un comparateur CMP qui commande l'arrêt du compteur.

La capacité C1 de l'échantillonneur est reliée d'un côté à un potentiel de référence et de l'autre à un interrupteur qui peut la connecter au conducteur de colonne Ccj. Cet interrupteur est commandé par un premier signal SHR₁ commun aux P échantillonneurs de la ligne de rang 1.

La capacité C2 reçoit d'un côté une tension en rampe linéaire partant du même potentiel de référence que celui de la capacité C1. De l'autre côté, elle est reliée par un interrupteur au conducteur de colonne Ccj. Cet interrupteur est commandé par un signal SHS₁ commun à toute la ligne de rang 1.

Les capacités ne sont toutefois pas reliées directement au conducteur de colonne par les deux interrupteurs qui viennent d'être mentionnés. Un interrupteur de sélection commandé par le signal SEL₁ permet de ne connecter les capacités que pendant la sélection de la ligne concernée, ici la ligne de rang 1.

L'échantillonnage pour une ligne donnée ADCₘ de circuits de numérisation se fait en deux étapes :
a). après la réinitialisation des noeuds de stockage ND des circuits de lecture : sélection de la ligne, établissement du signal SHR pour la ligne et donc stockage dans la capacité C1 du niveau de réinitialisation correspondant à cette ligne, présent à ce moment sur le conducteur de colonne grâce au circuit de lecture de même rang READₘ ; et réitération de ces opérations pour toutes les lignes de rang 1 à m ;
b). transfert de charges global pour toute la matrice (TRAa) vers les noeuds de stockage ; et de nouveau sélection de la ligne (SELₘ actif), établissement du signal SHSₘ pour la ligne et donc stockage dans la capacité C2 du niveau de signal utile correspondant à cette ligne, présent sur le conducteur de colonne grâce au circuit de lecture READₘ à nouveau sélectionné ; et réitération de ces opérations pour toutes les lignes.

A ce stade, les capacités contiennent, pour chaque circuit élémentaire de chaque ligne de 1 à m, un niveau de potentiel de réinitialisation et un niveau de potentiel de signal utile. Les bornes des capacités chargées par ces niveaux sont reliées aux entrées du comparateur CMP.

On déclenche alors, pour toute la matrice, une rampe de conversion RMP appliquée à la capacité C2. Ici on fait l'hypothèse que le potentiel de signal utile est plus négatif que le potentiel de référence et on utilise une rampe de tension montante à partir du potentiel de référence ; le potentiel de référence représente un niveau maximum possible pour le signal utile.

En même temps qu'on déclenche le début de la rampe, on déclenche le comptage par le compteur CPT. La rampe fait monter le potentiel sur une entrée du comparateur. Lorsque le potentiel sur cette entrée atteint le potentiel sur l'autre entrée, le comparateur bascule et interrompt le comptage. Le contenu final du compteur est une valeur numérique proportionnelle à la différence entre le niveau de potentiel utile et le niveau de réinitialisation. Elle représente donc le résultat d'une numérisation avec double échantillonnage corrélé.

La conversion est faite simultanément pour tous les circuits de numérisation du capteur. L'horloge CLK est commune à tous. La rampe RMP peut aussi être commune à tous les circuits. La conversion est faite périodiquement avec la période T entre le moment où toutes les capacités C2 ont été chargées à une valeur utile et le moment où on commence à lire de nouvelles valeurs de réinitialisation dans les circuits de lecture.

A ce moment, tous les compteurs des circuits de numérisation contiennent une valeur numérique. Le fonctionnement en défilement et intégration de charges requiert qu'on additionne toutes les valeurs numériques correspondant à l'observation d'un même point d'image par les différents pixels d'une même colonne de pixels du capteur.

Les valeurs numériques sont donc extraites des compteurs en vue de cette sommation.

Dans le cas général, les valeurs numériques stockées dans les différents compteurs d'une même colonne ne correspondent pas à un même point d'image car il y a un décalage dans le temps, de N périodes, entre l'observation d'un point d'image par le circuit de lecture de rang m et le circuit de lecture de rang m+1.

Les contenus des compteurs individuels doivent donc être mémorisés pour être ensuite additionnés à des contenus qui correspondront au même point d'image. Cette mémorisation est faite dans une mémoire MEM pour chaque ligne. Les contenus des compteurs sont remis à zéro après leur lecture puisqu'ils doivent recevoir une nouvelle information à chaque période T.

L'addition numérique est faite par un additionneur ADD sous le contrôle d'un séquenceur SEQ qui détermine quelles sont les additions à faire pour sommer les données numériques correspondant à un même point d'image. La sortie S de l'additionneur représente l'image recherchée.

Le séquencement des additions étant relativement compliqué et nécessitant une grande capacité de mémoire, on peut préférer, dans une réalisation différente, ne pas remettre à zéro le contenu du compteur après une lecture mais charger dans le compteur, avant chaque conversion, une valeur initiale qui représente déjà un cumul des valeurs numériques obtenues pour le même point d'image par les groupes précédents de N lignes. Le compteur compte alors à partir de cette valeur initiale et son contenu final représente une accumulation supplémentaire pour ce point d'image. Ce contenu est transmis à la ligne suivante de circuits de numérisation, mais avec un retard de NxT correspondant au défilement de N lignes de pixels, pour servir à charger une valeur initiale dans le compteur suivant au moment où ce dernier devra convertir une valeur correspondant encore au même point d'image. Et ainsi de suite, les compteurs de la dernière ligne de circuits de numérisation contiendront systématiquement une accumulation de M valeurs numériques correspondant toutes au même point d'image, ces M valeurs numériques étant elles-mêmes des conversions de charges qui sont l'accumulation de charges fournies par N pixels ayant vu le même point d'image.

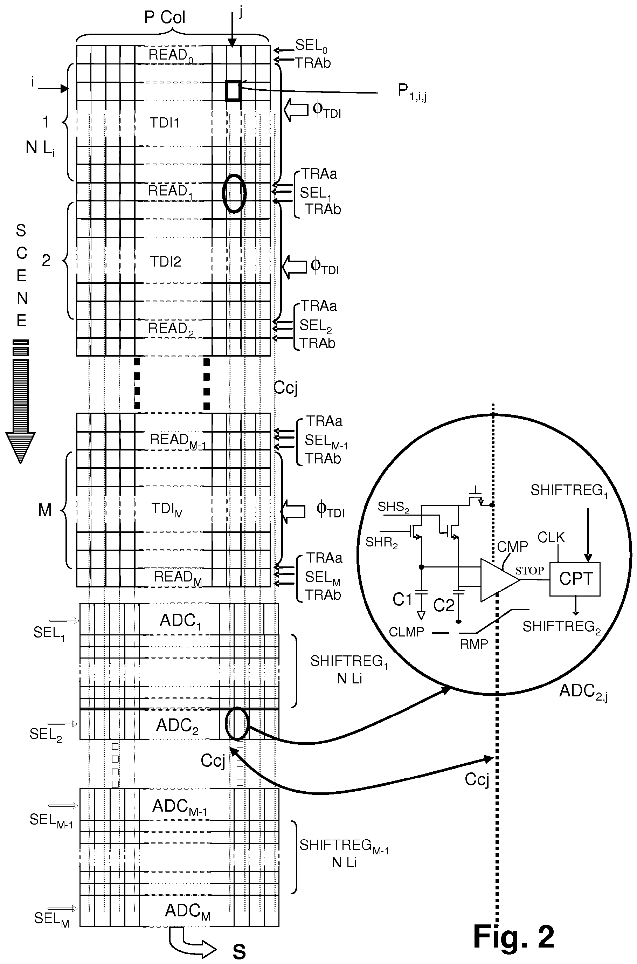

La figure 2 représente une manière de réaliser cette solution : une ligne de rang m de circuits de numérisation est séparée de la ligne suivante de rang m+1 par N lignes de registres numériques fonctionnant en registres à décalage dans le sens vertical avec une période de décalage T : le contenu des compteurs de la ligne de rang m est transféré dans la première ligne de registres, puis à chaque période les contenus des registres d'une ligne avancent dans la ligne suivante. Au bout de N périodes, le contenu de la dernière ligne de registres est appliqué comme valeur numérique d'initialisation aux compteurs de la ligne de circuits de numérisation de rang m+1. Lors de la conversion, les compteurs compteront à partir de cette valeur.

Le groupe de N lignes de registres numériques qui suit la ligne de circuits de numérisation ADCₘ est désigné par SHIFTREGₘ. Il n'y a pas de registres à décalage après la ligne ADC_{M} puisque les compteurs de cette ligne contiennent l'accumulation de valeurs numériques recherchée.

Le détail d'un circuit élémentaire de numérisation ADC_{2,j} de rang 2 en ligne et j en colonne, est représenté ; il est semblable à celui de la figure 1 et fonctionne de la même manière mais il y a une entrée d'initialisation pour le compteur, cette entrée recevant la sortie de la Nième ligne du registre à décalage de rang précédent SHIFTREG₁ ; la sortie du compteur est reliée à la première ligne de registres du registre à décalage de rang suivant SHIFTREG₂.

Pour le circuit de la figure 1 comme pour celui de la figure 2, on comprendra que si on veut faire un capteur à défilement bi-directionnel, le circuit de lecture additionnel READ₀ est nécessaire, et il faut bien sûr reconfigurer la synchronisation de la sélection de circuit de lecture et du circuit de numérisation correspondant : pour le défilement en sens inverse de celui qui a été décrit, la première ligne, de rang 1, du groupe de rang m contient l'accumulation de N prises de vue d'une même ligne et c'est le circuit de lecture de rang m-1 qui va lire cette accumulation, mais c'est la ligne de circuits de numérisation de rang m qui va numériser cette accumulation. Par conséquent, sauf si on prévoit une ligne supplémentaire de rang 0 pour la numérisation, il faut prévoir que le signal de sélection SEL des circuit de lecture de rang m-1 est synchrone du signal de sélection des circuits de numérisation de rang m. Dans l'autre sens, il y avait synchronisation de la sélection des circuits de lecture de rang m et de numérisation de rang m.

Dans ce qui précède on a considéré que la ligne de circuits de lecture READₘ est une ligne de circuiterie électrique ne contenant que le noeud de stockage et les cinq transistors mentionnés. On peut également prévoir que la ligne de circuits de lecture est une ligne constituée comme une zone de transfert de charges permettant un transfert direct entre deux groupes de N lignes. Dans ce cas il n'est pas nécessaire de prévoir les transistors de transfert TRAa et TRAb ; ceux-ci sont remplacés par des grilles de transfert normales entre pixels. On peut même prévoir que la ligne de circuits de lecture est une ligne de pixels photosensibles dans laquelle une partie de la surface qui serait normalement réservée à la génération de charges photosensibles est utilisée pour loger un noeud de stockage isolé électriquement du reste de la surface photosensible.

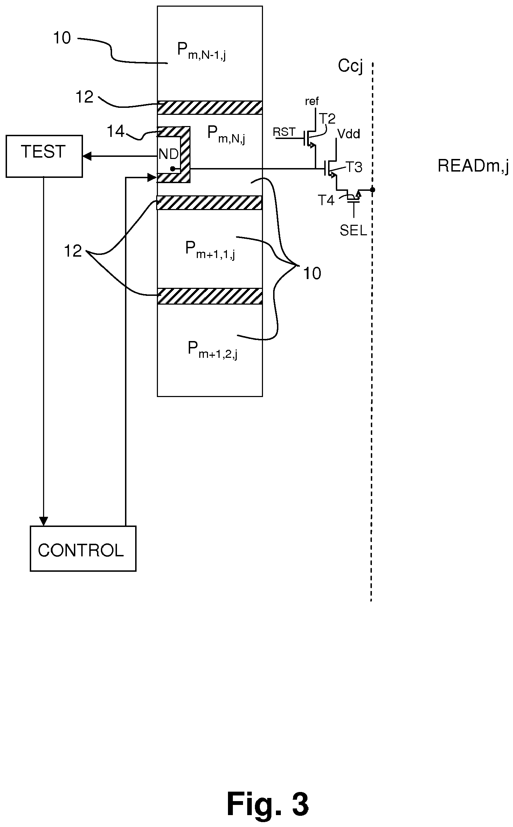

La figure 3 représente cette solution. On y voit la zone de passage entre deux groupes de N lignes successifs, par exemple de rang m et m+1. Une seule colonne de pixels de rang j est représentée, avec des pixels P_{m,N-1,j} (avant dernière ligne du groupe m), P_{m,N,j} (dernière ligne), P_{m+1,1,j} et P_{m+1,2,j} (première et deuxième lignes du groupe suivant m+1). Le transistor de réinitialisation T2, le transistor suiveur T3, et le transistor de sélection T4, qui font partie du circuit de lecture de rang m, sont représentés à côté du N^{ième} pixel P_{m,N,}j.

Les pixels sont symbolisés par des zones 10 de capture de photons séparées par des grilles de transfert 12 mais dans la réalité les pixels peuvent être plus complexes.

La surface du N^{ième} pixel est en partie utilisée pour créer un noeud de stockage de charges ND (qui peut être une diffusion de type N+ dans un substrat P). Ce noeud ND est isolé par une grille 14 qui joue le rôle de la grille de transfert TRAa mentionnée à propos de la figure 1, c'est-à-dire qui permet de transférer les charges du N^{ième} pixel vers le noeud de stockage. Le noeud est connecté à la grille du transistor suiveur T3 et à la source du transistor de réinitialisation comme expliqué en référence à la figure 1.

On voit qu'avec cette disposition les charges stockées dans le N^{ième} pixel passent naturellement vers le premier pixel du groupe de lignes suivantes, sauf si elles sont détournées vers le noeud de stockage. On peut contrôler la grille 14 pour choisir de laisser passer les charges pour continuer une accumulation de charges analogique ou de les détourner vers le noeud de stockage pour les numériser. On peut en particulier prévoir que si les charges sont en faible quantité on les laisse passer, et que si elles sont en quantité importante on les détourne vers le noeud de stockage. Dans le premier cas, elles poursuivent leur chemin et s'accumulent avec les charges des pixels des lignes du groupe suivant ; elles ne subissent pas de conversion analogique-numérique et ne sont pas additionnées numériquement ; elles continuent à être accumulées analogiquement avec un faible bruit. Dans le second cas, on les numérise et on fait une sommation numérique.

On peut d'ailleurs utiliser une polarisation appropriée de la grille 14 pour tester la quantité de charges présente dans le pixel : la polarisation permanente de la grille 14 est choisie pour qu'au delà d'un seuil de quantité de charges dans le N^{ième} pixel, une partie des charges déborde naturellement dans le noeud de stockage ; une détection du potentiel du noeud de stockage est alors faite pour tester la présence d'un déversement de charges ; s'il y a eu un déversement naturel on considère qu'il y a trop de charges, qu'il faut donc les lire, les numériser et les additionner numériquement aux charges numérisées pour d'autres groupes de lignes de pixels ; on applique alors à la grille un signal d'abaissement complet de la barrière entre le N^{ième} pixel et le noeud de stockage et on fait la lecture des charges recueillies. Si au contraire il n'y a pas de détection d'un déversement de charges, on considère qu'on peut continuer une intégration analogique dans le groupe de lignes suivant et on ne fait pas de lecture de charges contenues dans le N^{ième} pixel ; les charges passent du N^{ième} pixel du groupe m vers le premier pixel du groupe suivant.

La solution consistant à utiliser la N^{ième} ligne photosensible comme ligne de lecture n'est possible que si les pixels sont assez gros pour qu'on ait la place de loger à la fois une surface de stockage de charges et les transistors du circuit de lecture, sans perturber le transfert de charges du (N-1)^{ième} pixel vers le N^{ième} pixel et de ce dernier vers le groupe de lignes suivant. On notera que la surface de stockage 10 du N^{ième} pixel n'est pas forcément photosensible : elle peut être masquée par une couche opaque, et dans ce cas l'intégration de charges ne se fait que sur N-1 pixels, mais la surface de stockage est constituée comme si elle était un pixel photosensible à transfert de charges, c'est-à-dire qu'elle permet le transfert des charges du groupe de lignes de rang m au suivant.

Dans ces diverses réalisations, on peut envisager dans certains cas que le nombre de lignes N soit variable d'un groupe à l'autre. Le nombre de lignes de registres numériques dans la réalisation de la figure 2 reste bien entendu en accord avec le nombre de lignes dans le groupe de lignes de pixels associé.

Les échantillonneurs ont été décrits comme ayant chacun deux capacités stockant respectivement le niveau de réinitialisation et le niveau de signal utile mais des échantillonneurs avec une seule capacité stockant successivement les deux niveaux peuvent être utilisés.

On remarquera qu'une même ligne d'image a été convertie successivement par tous les M circuits de numérisation, ce qui moyenne les erreurs de conversion pour tous les pixels.

Dans la réalisation de la figure 2, on peut tester les circuits de lecture indépendamment de la matrice de pixels en envoyant une séquence de test sur la première ligne de compteurs pour vérifier sa propagation jusqu'à la dernière ligne.

Le capteur peut s'adapter au niveau de luminance moyen par une modification de la pente de la rampe des convertisseurs.

Une autre manière de s'adapter au niveau de luminance moyen est de réduire, en cas de forte luminance, le nombre d'étages de conversion numérique utilisés en se contentant des données sommées dans M' étages (M'<M).

Le capteur selon l'invention peut être réalisé sur substrat aminci éclairé par la face arrière (opposée à la face avant par laquelle sont fabriqués les transistors des circuits du capteur).

## Revendications

1. Capteur d'image à défilement et sommation, permettant la lecture synchronisée d'une même ligne d'image successivement par plusieurs lignes de P pixels photosensibles et la sommation pixel à pixel des signaux lus par les différentes lignes, **caractérisé en ce que** le capteur comprend :
- une matrice de M groupes de N lignes de P pixels produisant des charges proportionnelles à l'éclairement, ces pixels étant agencés en P registres à transfert de charges en colonne de rang j, j variant de 1 à P, permettant l'accumulation progressive dans un pixel de rang j de la Nième ligne de pixels d'un groupe de rang m, m variant de 1 à M, des charges recueillies dans les N pixels de rang j de ce groupe,
- à l'intérieur de la matrice de pixels, M lignes de P circuits de lecture (READ_{m,j}) adressables en ligne et effectuant une conversion charge-tension des charges recueillies dans les P pixels de la Nième ligne d'un groupe de pixels, les circuits de lecture d'une ligne de rang m étant disposés en ligne et chaque circuit de lecture de rang j de cette ligne étant relié à un conducteur de colonne (Ccj) respectif de rang j commun à tous les circuits de lecture de rang j des différentes lignes pour fournir sur ce conducteur un signal électrique analogique résultant des charges accumulées dans les pixels de rang j de la N^{ième} ligne d'un groupe de lignes de pixels quelconque,
- en dehors de la matrice de pixels, M lignes de P circuits de numérisation (ADC_{m,j}) adressables en ligne chacune en correspondance avec l'adressage d'une ligne respective de circuits de lecture, le circuit de numérisation de rang j de cette ligne comprenant un échantillonneur pour échantillonner un signal analogique présent sur le conducteur de colonne de rang j, et un convertisseur analogique-numérique pour fournir une valeur numérique du signal analogique,
- un moyen de sommation de valeurs numériques apte à additionner des valeurs numériques issues des convertisseurs et correspondant à l'échantillonnage de plusieurs signaux analogiques correspondant tous à l'observation d'un même point d'image de rang j dans une ligne d'image observée.

2. Capteur d'image selon la revendication 1, **caractérisé en ce que** le circuit de lecture comporte un noeud (ND) de stockage de charges, un transistor (T1) de transfert pour déverser les charges d'un pixel d'une N^{ième} ligne vers le noeud de stockage, un transistor (T2) de réinitialisation du potentiel du noeud de stockage, un transistor suiveur (T3) pour engendrer un potentiel représentant la quantité de charges dans le noeud de stockage, et un transistor de sélection de ligne (T4) pour sélectionner une ligne de circuits de lecture parmi M et relier le transistor suiveur des circuits de lecture de cette ligne à un conducteur de colonne respectif.

3. Capteur d'image selon la revendication 2, **caractérisé en ce que** l'échantillonneur faisant partie d'un circuit de numérisation élémentaire comprend des moyens pour stocker d'abord un niveau de référence de tension à la suite d'une impulsion de réinitialisation appliquée au transistor de réinitialisation d'un circuit de lecture, puis un niveau de signal à la suite d'une impulsion de transfert appliquée au transistor de transfert.

4. Capteur d'image selon l'une des revendications 1 à 3, **caractérisé en ce que** le moyen de sommation est distribué dans les circuits de numérisation.

5. Capteur d'image selon l'une des revendications 1 à 4, **caractérisé en ce que** le convertisseur analogique-numérique présent dans chaque circuit de numérisation est un convertisseur à rampe comprenant un comparateur et un compteur, le compteur comptant à une cadence fixe jusqu'au basculement du comparateur lors de l'application d'une rampe de tension à une entrée du comparateur.

6. Capteur d'image selon la revendication 5, **caractérisé en ce que** la sortie du compteur d'un circuit de numérisation de rang m en ligne et de rang j en colonne est reliée à une entrée d'initialisation du compteur d'un circuit de numérisation de même rang j en colonne et de rang m+1 en ligne afin que le contenu dudit compteur du circuit de rang m+1 à la fin de la rampe corresponde à l'addition de la quantité de lumière reçue par un groupe de N pixels et du contenu précédent du compteur de rang m, correspondant à un autre groupe de N pixels ayant vu le même point d'image.

7. Capteur d'image selon l'une des revendications 1 à 6, **caractérisé en ce que** la ligne de circuits de lecture est incorporée à une ligne de pixels photosensibles ou non photosensibles constituée comme une zone de transfert de charges permettant un transfert direct entre deux groupes de N lignes, et comprend des moyens (14) pour autoriser de manière sélective soit un transfert de charges entre une dernière ligne de pixels d'un groupe de N lignes et une première ligne de pixels du groupe suivant soit un déversement de charges de la dernière ligne de pixels d'un groupe vers un noeud de stockage en vue de la lecture et la numérisation des charges déversées.

8. Capteur d'image selon la revendication 7, **caractérisé en ce qu'**il comporte dans chaque ligne de circuit de lecture un moyen de détection de la quantité de charges présentes dans le pixel de rang j de la N^{ième} ligne de pixels d'un groupe de pixels de rang m, et un moyen pour lire ces charges dans le circuit de lecture de rang m en ligne et de rang j en colonne si la quantité de charges dépasse un seuil ou de transférer ces charges, sans les lire, vers la première ligne de pixels du groupe de pixels de rang m+1 si la quantité de charges est inférieure à ce seuil.

## Patentansprüche

1. Bildsensor mit Ablauf und Summierung, der das synchronisierte Lesen einer selben Bildzeile aufeinander folgend durch mehrere Reihen von P fotoempfindlichen Pixeln und das pixelweise Summieren der gelesenen Signale durch die unterschiedlichen Reihen zulässt, **dadurch gekennzeichnet, dass** der Sensor Folgendes umfasst:
- eine Matrix von M Gruppen von N Reihen von P Pixeln, die proportionale Beleuchtungsladungen produzieren, wobei diese Pixel in P Ladungsübertragungsregistem in einer Spalte von Rang j angeordnet sind, wobei j von 1 bis P variiert, die das progressive Ansammeln in einem Pixel von Rang j der N-ten Reihe von Pixeln einer Gruppe von Rang m, wobei m von 1 bis M variiert, der in den N Pixeln von Rang j dieser Gruppe gernteten Ladungen zulässt,
- innerhalb der Pixelmatrix M Reihen von P Leseschaltungen (READ_{m,j}), reihenweise adressierbar, die eine Ladung-Spannung-Umwandlung von in den P Pixeln der N-ten Reihe einer Gruppe von Pixeln geernteten Ladungen durchführen, wobei die Leseschaltungen einer Reihe von Rang m reihenweise angeordnet sind und jede Leseschaltung von Rang j dieser Reihe mit einem jeweiligen Spaltenleiter (Ccj) von Rang j verbunden ist, der allen Leseschaltungen von Rang j der unterschiedlichen Reihen gemeinsam ist, um auf diesem Leiter ein analoges elektrisches Signal zuzuführen, das aus den akkumulierten Ladungen in den Pixeln von Rang j der N-ten Reihe einer Gruppe von Reihen von beliebigen Pixeln resultiert,
- außerhalb der Pixelmatrix M Reihen von P Digitalisierungsschaltungen (ADC_{m,j}), die reihenweise jeweils in Korrespondenz mit der Adressierung einer jeweiligen Reihe von Leseschaltungen adressierbar sind, wobei die Digitalisierungsschaltung von Rang j dieser Reihe einen Abtaster zum Abtasten eines auf dem Spaltenleiter von Rang j vorhandenen analogen Signals und einen Analog-Digital-Wandler zum Liefern eines digitalen Wertes des analogen Signals umfasst,
- ein Mittel zum Summieren von digitalen Werten, das digitale Werte addieren kann, die von den Wandlern stammen und der Abtastung von mehreren analogen Signalen entsprechen, die alle der Beobachtung eines selben Bildpunkts von Rang j in einer beobachteten Bildreihe entsprechen.

2. Bildsensor nach Anspruch 1, **dadurch gekennzeichnet, dass** die Leseschaltung einen Ladungsspeicherknoten (ND), einen Übertragungstransistor (T1) zum Ablassen der Ladungen eines Pixels einer N-ten Reihe zum Speicherknoten, einen Transistor (T2) zum Reinitialisieren des Potentials des Speicherknotens, einen Folgetransistor (T3) zum Erzeugen eines Potentials, das die Menge an Ladung in dem Speicherknoten repräsentiert, und einen Reihenauswahltransistor (T4) zum Auswählen einer Reihe von Leseschaltungen unter M und zum Verbinden des Folgetransistors der Leseschaltungen dieser Reihe mit einem jeweiligen Spaltenleiter umfasst.

3. Bildsensor nach Anspruch 2, **dadurch gekennzeichnet, dass** der Abtaster, der Teil einer elementaren Digitalisierungsschaltung ist, Mittel zum Speichern zunächst eines Spannungsreferenzpegels im Anschluss an einen Neuinitialisierungsimpuls, angelegt an den Neuinitialisierungstransistor einer Leseschaltung, dann eines Signalpegels im Anschluss an einen Übertragungsimpuls, angelegt an den Übertragungstransistor, umfasst.

4. Bildsensor nach einem der Ansprüche 1 bis 3, **dadurch gekennzeichnet, dass** das Summierungsmittel in den Digitalisierungsschaltungen verteilt ist.

5. Bildsensor nach einem der Ansprüche 1 bis 4, **dadurch gekennzeichnet, dass** der in jeder Digitalisierungsschaltung vorhandene Analog-Digital-Wandler ein Rampenwandler ist, umfassend einen Komparator und einen Zähler, wobei der Zähler mit einer festen Rate bis zum Kippen des Komparators beim Anlegen einer Spannungsrampe an einen Eingang des Komparators zählt.

6. Bildsensor nach Anspruch 5, **dadurch gekennzeichnet, dass** der Ausgang des Zählers einer Digitalisierungsschaltung von Rang m nach Reihe und von Rang j nach Spalte mit einem Initialisierungseingang des Zählers einer Digitalisierungsschaltung desselben Rangs j nach Spalte und von Rang m+1 nach Reihe verbunden ist, damit der Inhalt des Zählers der Schaltung von Rang m+1 am Ende der Rampe der Addition der von einer Gruppe von N Pixeln empfangenen Lichtmenge und dem vorherigen Inhalt des Zählers von Rang m entsprechend einer anderen Gruppe von N Pixeln entspricht, die denselben Bildpunkt gesehen haben.

7. Bildsensor nach einem der Ansprüche 1 bis 6, **dadurch gekennzeichnet, dass** die Leseschaltungsreihe in eine fotoempfindliche oder nicht fotoempfindliche Pixelreihe integriert ist, ausgebildet als eine Ladungsübertragungszone, die eine direkte Übertragung zwischen zwei Gruppen von N Reihen zulässt, und Mittel (14) umfasst zum Autorisieren, auf selektive Weise, entweder einer Ladungsübertragung zwischen einer letzten Reihe von Pixeln einer Gruppe von N Reihen und einer ersten Reihe von Pixeln der Folgegruppe oder eines Ablassens von Ladung der letzten Reihe von Pixeln einer Gruppe zu einem Speicherknoten im Hinblick auf das Lesen und die Digitalisierung der abgelassenen Ladungen.

8. Bildsensor nach Anspruch 7, **dadurch gekennzeichnet, dass** er in jeder Leseschaltungsreihe ein Mittel zum Erkennen der im Pixel von Rang j der N-ten Reihe von Pixeln einer Gruppe von Pixeln von Rang m vorhandenen Menge an Ladungen und ein Mittel zum Lesen dieser Ladungen in der Leseschaltung von Rang m nach Reihe und von Rang j nach Spalte umfasst, wenn die Ladungsmenge eine Schwelle übersteigt, oder zum Übertragen dieser Ladungen, ohne sie zu lesen, zur ersten Reihe von Pixeln der Gruppe von Pixeln von Rang m+1, wenn die Ladungsmenge kleiner ist als diese Schwelle.

## Claims

1. A swipe image sensor with summation, allowing the synchronized reading of the same image line by a plurality of lines of P photosensitive pixels successively and the pixel to pixel summation of the signals read by the different lines, **characterized in that** the sensor comprises:
- an array of M groups of N lines of P pixels producing charges proportional to the illumination, these pixels being arranged in P charge transfer registers in a column of rank j, where j varies from 1 to P, allowing the progressive accumulation, in a pixel of rank j of the N^{th} line of pixels of a group of rank m, where m varies from 1 to M, of the charges collected in the N pixels of rank j of this group,
- within the array of pixels, M lines of P read circuits (READ_{m,j}) addressable in line and performing a charge-to-voltage conversion of the charges collected in the P pixels of the N^{th} line of a group of pixels, the read circuits of a line of rank m being positioned in line and each read circuit of rank j of this line being connected to a respective column conductor (Ccj) of rank j common to all the read circuits of rank j of the different lines, in order to provide on this conductor an analog electrical signal based on the charges accumulated in the pixels of rank j of the N^{th} line of any group of lines of pixels,
- outside the array of pixels, M lines of P digitization circuits (ADC_{m,j}), each addressable in line, in correspondence to the addressing of a respective line of reading circuits, the digitization circuit of rank j of this line comprising a sampler for sampling an analog signal present on the column conductor of rank j, and an analog-digital converter for supplying a digital value of the analog signal,
- a means of summation of digital values capable of adding together digital values obtained from the converters and corresponding to the sampling of a plurality of analog signals all corresponding to the observation of the same image point of rank j in an observed image line.

2. The image sensor according to claim 1, **characterized in that** the read circuit includes a charge storage node (ND), a transfer transistor (T1) for dumping the charges of a pixel of an N^{th} line toward the storage node, a transistor (T2) for reinitializing the potential of the storage node, a follower transistor (T3) for generating a potential representing the quantity of charges in the storage node, and a line selection transistor (T4) for selecting a line of read circuits among M and connecting the follower transistor of the read circuits of this line to a respective column conductor.

3. The image sensor according to claim 2, **characterized in that** the sampler forming part of an elementary digitization circuit comprises means for initially storing a voltage reference level following a reinitialization pulse applied to the reinitialization transistor of a read circuit, and then storing a signal level following a transfer pulse applied to the transfer transistor.

4. The image sensor according to any of claims 1 to 3, **characterized in that** the summation means is distributed in the digitization circuits.

5. The image sensor according to any of claims 1 to 4, **characterized in that** the analog-digital converter present in each digitization circuit is a ramp converter comprising a comparator and a counter, with the counter counting at a fixed rate until the comparator is tripped when a voltage ramp is applied to an input of the comparator.

6. The image sensor according to claim 5, **characterized in that** the output of the counter of a digitization circuit of rank m in line and of rank j in column is connected to an initialization input of the counter of a digitization circuit of the same rank j in column and of rank m+1 in line so that the content of said counter of the circuit of rank m+1 at the end of the ramp corresponds to the addition of the quantity of light received by a group of N pixels and to the preceding content of the counter of rank m, corresponding to another group of N pixels which have seen the same image point.

7. The image sensor according to any of claims 1 to 6, **characterized in that** the line of read circuits is incorporated in a line of pixels which may or may not be photosensitive, constructed as a transfer zone allowing direct transfer between two groups of N lines, and comprises means (14) allowing, in a selective way, either the transfer of charges between a last line of pixels of a group of N lines and a first line of pixels of the following group, or the dumping of charges from the last line of pixels of one group toward a storage node for the reading and digitization of the dumped charges.

8. The image sensor as claimed in claim 7, **characterized in that** it comprises in each line of read circuits a means for detecting the quantity of charges present in the pixel of rank j of the N^{th} line of pixels of a group of pixels of rank m, together with a means for reading these charges in the read circuit of rank m in line and of rank j in column if the quantity of charges exceeds a threshold, or for transferring these charges, without reading them, toward the first line of pixels of the group of pixels of rank m+1 if the quantity of charges is below this threshold.
